# EUROPÄISCHE PATENTSCHRIFT

(11) **EP 0 618 323 B1**
(45) Veröffentlichungstag und Bekanntmachung des Hinweises auf die Patenterteilung: **24.11.1999**
(21) Anmeldenummer: 93120755.9
(22) Anmeldetag: 22.12.1993
(51) Int. Cl.: D06F 35/00, D06F 23/02

(54) **Waschmaschine mit einer reversierend betriebenen Wäschetrommel sowie Verfahren zum Betreiben derselben**
Washing machine with a reversible driven laundry drum and its operation procedure
Machine à laver avec tambour à linge à entrainement réversible et procédé de son opération

(30) Priorität: 31.03.1993 DE 4310595
(43) Veröffentlichungstag der Anmeldung: 05.10.1994
(73) Patentinhaber: BSH Bosch und Siemens Hausgeräte GmbH, 81669 München (DE)
(72) Erfinder: Schulze, Ingo, Dipl.-Ing., D-10405 Berlin (DE); Czyzewski, Gundula, Dipl.-Ing., D-12627 Berlin (DE); Wentzlaff, Günter, Dr.-Ing., D-13581 Berlin (DE); Moschütz, Harald, Dipl.-Ing., D-14979 Grossbeeren (DE)

(56) Entgegenhaltungen:
- EP-A- 0 369 933
- EP-A- 0 373 063
- DE-A- 3 741 177

## Beschreibung

Die Erfindung geht aus von einem Verfahren bzw. einer Waschmaschine zur Verbesserung der Durchflutung und der Waschwirkung von in einer Waschmaschine mit einer perforierten Wäschetrommel, die während des Wasch- und/oder Spülprozesses zeitweise mit wechselnden Drehrichtungen angetrieben wird (sogenannter Reversierbetrieb), zu waschenden Wäsche.

Eine derartige Waschmaschine ist aus der DE-A-37 41 177 bekannt. Darin wird die Wäsche während des Wasch- und des Spülprozesses mit einer üblichen Trommeldrehzahl von beispielsweise 55 1/min innerhalb der Wäschetrommel reversierend umgelagert. Während der Stillstandzeiten der Wäschetrommel sickert dabei die Lauge langsam in Schwerkraftrichtung durch die Wäsche, ehe die Wäsche in der anschließenden Betriebsphase wieder umgeschichtet wird. In den Stillstandzeiten steigt daher im Laugenbehälter das Niveau der nicht in der Wäsche enthaltenen Lauge, die während der Betriebsphasen der Wäschetrommel weitgehend wieder von der Wäsche aufgenommen wird. Während der Betriebsphasen sinkt daher das Niveau der freien Lauge wieder.

Außerdem ist aus der EP 0 373 063 A1 ein Verfahren zum Waschen von Wäsche bekannt, bei dem die Wäsche im Reversierbetrieb unsymmetrisch Trommeldrehungen mit normaler Wasch-Drehzahl (sogenannter Fallgeschwindigkeit, z.B. 55 1/min) oder mit einer darunter liegenden Drehzahl (sogenannter Rollgeschwindigkeit, z.B. 40 1/min) ausgesetzt wird. Dabei wird die Wäsche entweder - wie bekannt - bis in den oberen Trommelbereich angehoben und fällt von dort in den unteren Bereich zurück (Fallgeschwindigkeit) oder im unteren Trommelbereich nur einer Rollbewegung ausgesetzt (Rollgeschwindigkeit). Auf die Durchflutung der Wäsche mit Lauge hat diese Maßnahme so gut wie keinen Einfluß.

Ein aus EP 0 369 933 A1 bekanntes Waschverfahren beschreibt einen symmetrischen Reversierbetrieb, bei dem die Trommeldrehzahl in beiden Drehrichtungen zunächst jeweils auf einen hohen Drehzahlwert eingestellt und dann unmittelbar auf eine niedrigere Drehzahl herabgestuft wird. Dabei liegen auch diese Drehzahlen bei 55 1/min und bei 40 1/min. Auch dieses bekannte Verfahren ist nicht geeignet, die Wäsche-Durchflutung in gewünschter Weise zu verbessern.

Der Erfindung liegt die Aufgabe zugrunde, bei einem bekannten Verfahren gemäß Oberbegriff eine Betriebsweise vorzusehen, bei der unter Vermeidung der ihr eigenen, genannten Nachteile ebenfalls eine intensive Durchflutung der Wäsche mit Lauge stattfindet. Außerdem ist damit eine Verbesserung der Waschwirkung in der Wäsche sowie eine Reduzierung des Wasser-, Waschmittel- und Energieverbrauches anzustreben. Diese Aufgabe wird durch die Merkmale der Ansprüche 1 (Verfahren) und 7 (Vorrichtung) gelöst.

Um die Durchflutung der Wäsche mit Lauge intensiver zu gestalten, sind bei der bekannten Waschmaschine gemäß DE-A-37 41 177 sogenannte Wasch-Schleuderphasen eingeschaltet, während derer die Wäschetrommel aus dem Stillstand bis auf eine Drehzahl von etwa 300 1/min beschleunigt wird, damit ein großer Anteil der Lauge weitgehend abgeschleudert werden kann. Dabei steigt das Niveau der freien Lauge im Laugenbehälter zusätzlich an.

Wegen der Beschleunigung der Wäschetrommel über die Resonanzdrehzahl hinaus, die bei etwa 120 1/min liegen kann, wird die schwingend aufgehängte Laugenbehälter-Baugruppe während des Wasch- und Spülprozesses häufig extrem stark belastet. Diese Extrem-Belastung rührt daher, daß die Wäschetrommel stets aus einem hohen Laugeniveau heraus mit völlig durchnäßter Wäsche beschleunigt werden muß. Die Belastungen betreffen einerseits den Antrieb (Motor, Getriebe) und andererseits während des Resonanz-Durchganges die Laugenbehälter-Baugruppe und deren Aufhängung. Wegen der dabei auftretenden extrem großen Auslenkungen der Laugenbehälter-Baugruppe muß in der Waschmaschine auch ein größerer Schwingraum vorgesehen sein, damit diese Baugruppe während des Resonanz-Durchganges nicht an Gehäuseteile anschlägt. Andererseits ist aber bei nur gelegentlich eingeschalteten Wasch-Schleuderphasen ein intensiveres Austreiben der Lauge aus der Wäsche mit höherer Drehzahl erforderlich.

Erfindungsgemäß wird die obenstehende Aufgabe dadurch gelöst, daß die Wäschetrommel in der einen Drehrichtung auf eine erste Drehzahl deutlich unterhalb der Anlegedrehzahl und in der anderen Drehrichtung auf eine zweite Drehzahl deutlich oberhalb der Anlegedrehzahl beschleunigt wird. Dadurch wird in jeder Reversierphase, die beispielsweise 25 s dauern kann, in der einen Drehrichtung der Wäsche Gelegenheit gegeben, sich intensiv mit Lauge vollzusaugen und in der anderen Drehrichtung diesen Teil der Lauge durch Schleudern wieder abzugeben. Da dieser Vorgang in jedem Reversierzyklus - also z.B. alle 25 s- abläuft, ist der Austausch der jeweils in der Wäsche gebundenen Laugenteile intensiver als beim Stand der Technik. Trotzdem gelingt es, mit den erfindungsgemäßen Maßnahmen die dem Stand der Technik anhaftenden Nachteile zu vermeiden, weil die zum Ausschleudern benötigte Drehzahl erheblich kleiner gehalten werden kann. Die erfindungsgemäßen Maßnahmen reduzieren den Wasserverbrauch durch künstliche Erhöhung der freien Flotte beim Abschleudern der Lauge aus der Wäsche in der anderen Drehrichtung und intensivieren den Laugenaustausch in der Wäsche, wodurch eine merkbar bessere Waschwirkung bei Einsparung von Waschmitteln erzielt wird. Die Wäsche verteilt sich während der Reversierzyklen gleichmäßiger in der Trommel, so daß alle Wäscheteile gleichmäßig vom Laugenaustausch betroffen sind. Dieser Vorgang beschleunigt auch die Spülwirkung während des Spülprozesses, wodurch die Dauer sowohl des Waschprozesses wie auch des Spülprozesses verringert werden kann. Eine Verringerung des Wasserverbrauchs beim Waschprozeß vermindert auch den Energieverbrauch zum Aufheizen des Wassers und bei Verkürzung der Wasch- und Spülprozesse auch durch kürzere Motor-Einschaltdauern. Die Anlegedrehzahl ist diejenige systembedingte Drehzahl, bei der sich die in der Wäschetrommel vorhandenen Wäschestücke aufgrund der Fliehkräfte an den Trommelmantel anlegen. Bei Wäschetrommeln mit ca. 470 mm Durchmesser liegt diese bei etwa 70 1/min.

In einer Waschmaschine mit in der Trommel angeordneten Mitnehmern mit Schöpfwirkung wird die Schöpfwirkung noch besser ausgenutzt, wenn das erfindungsgemäße Verfahren dadurch vorteilhaft weitergebildet wird, daß die erste Drehzahl in derjenigen Drehrichtung angewendet und auf denjenigen Drehzahlwert eingestellt wird, bei der die Schöpfwirkung am größten ist.

Besonders vorteilhaft ist eine Ausbildung der Erfindung, bei der die zweite Drehzahl deutlich unterhalb der Resonanzdrehzahl liegt. Dann kann mit Sicherheit vermieden werden, daß unerwünschte starke Resonanzschwingungen den Antrieb und die Laugenbehälter-Baugruppe überbeanspruchen.

Zur weiteren Schonung des Antriebs kann die Erfindung dahingehend vorteilhaft weitergebildet werden, daß die Wäschetrommel mindestens in der anderen Drehrichtung - also zum Start hin auf die zweite Drehzahl - mittels einer sogenannten Sanftanlauf-Schaltung langsam auf die Nenndrehzahl beschleunigt wird.

In einer mit Schöpfvorrichtungen an der Wäschetrommel ausgestatteten Waschmaschine hat sich eine erste Drehzahl als besonders geeignet erwiesen, deren Nennwert ungefähr gleich 35 1/min beträgt.

In einer vorstehend beispielsweise ausgeführten Waschmaschine hat sich weiterhin ein Verfahren als besonders geeignet erwiesen, bei dem für die zweite Drehzahl ein Nennwert eingestellt wird, der ungefähr 100 1/min beträgt.

In einer Waschmaschine zur Durchführung des erfindungsgemäßen Verfahrens mit einer Steuerungseinrichtung für die Drehzahl des Antriebsmotors der Wäschetrommel hat es sich als vorteilhaft erwiesen, wenn die Steuerungseinrichtung im Hinblick auf die Drehzahlwerte für den Reversierbetrieb einstellbar ausgebildet ist.

Bei einer Waschmaschine, die mit einer Einrichtung zum Feststellen der Menge des eingebrachten Wäschepostens ausgestattet ist, kann die Erfindung besonders vorteilhaft dadurch weitergebildet werden, daß die Nennwerte der Drehzahlen in Abhängigkeit von der Menge des Wäschepostens einstellbar sind. Da die Beladungsmenge der Wäschetrommel einen Einfluß auf die jeweils am besten geeignete Drehzahl in den beiden Drehrichtungen der Wäschetrommel hat, kann hierdurch noch eine weitere Optimierung stattfinden.

Anhand der in der Zeichnung dargestellten Ausführungsbeispiele ist die Erfindung nachstehend näher erläutert. Es zeigen:
- Fig. 1: ein Drehzahldiagramm für einen erfindungsgemäß gestalteten Reversier-Zyklus und
- Fig. 2: ein weiteres Beispiel eines Reversier-Zyklus, dargestellt an einem Drehzahldiagramm.

Vorausgesetzt, daß in einer Waschmaschine eine Wäschetrommel während eines Wasch- und/oder Schleuder-Abschnittes hin- und herdrehend, also reversierend angetrieben wird, schlägt die Erfindung vor, diesen Reversier-Zyklus so asymmetrisch einzurichten, daß der jeweilige Links- und Rechtslauf der Trommel unterschiedliche Einflüsse im Waschvorgang bewirken. Dabei verursacht eine der beiden Drehrichtungen ein Erhöhen des Niveaus der nicht gebundenen Lauge im Laugenbehälter und bewirkt ein besseres Durchfluten der Wäsche durch die Lauge, die andere Drehrichtung aber ein besseres Ablösen der Wäscheteile von der Trommelinnenwand, ein besseres Verteilen und Benetzen bzw. Beregnen der Wäsche. Dabei wird die kleinere Drehzahl von beispielsweise 35 1/min im Linkslauf angewendet, bei dem die Schöpfeinrichtungen in der Wäschetrommel wirksam sind und die höhere Drehzahl vor beispielsweise 100 1/min im Rechtslauf, bei dem die Schöpfwirkung solcher Schöpfeinrichtungen wirkungslos bleibt. Vorteilhafterweise können solche Schöpfvorrichtungen an Mitnehmern der Wäschetrommel angebracht sein, die beispielsweise von vornherein asymmetrisch wirken, d.h. im vorliegenden Beispiel nur im Linkslauf.

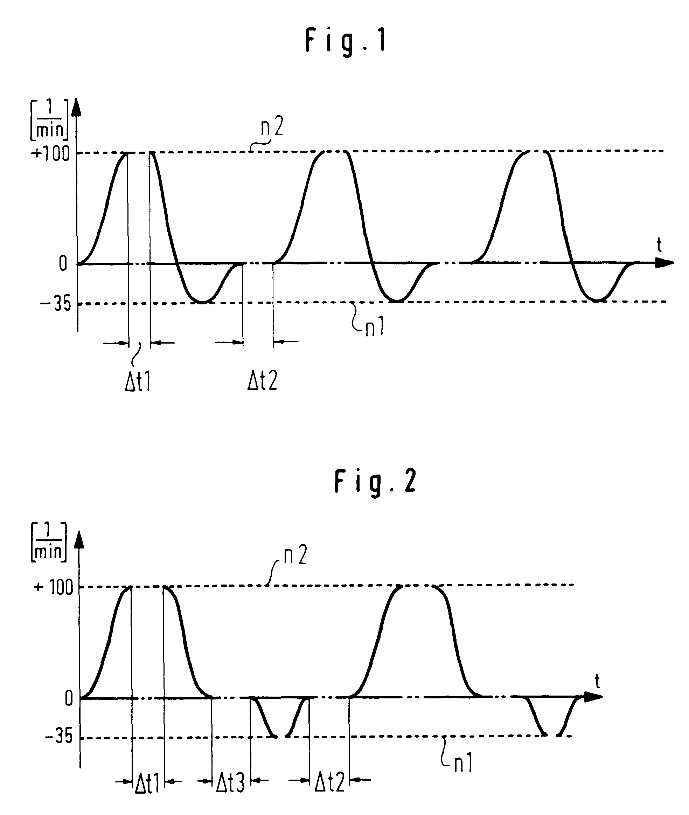

Beim Beispiel der Figur 1 wird die Trommel im Rechtslauf sanft auf 100 1/min beschleunigt, verweilt für eine Dauer Δt1 bei dieser Drehzahl und wird dann wieder auf eine Drehzahl 0 zurückgeführt, um unmittelbar in die Linkslaufphase mit einer Drehzahl von beispielsweise 35 1/min überführt zu werden. Die Länge der Zeitabschnitte für den Rechtslauf und den Linkslauf kann variiert werden. Nach der Linkslaufphase wird die Trommel wieder auf Stillstand zurückgeführt und verbleibt ebenfalls für eine wählbare Dauer Δt2 im Stillstand. Die Zeitdauern Δt1 und Δt2 sind ebenfalls variierbar und können im Extremfall 0 sein.

Bei dem in Figur 2 dargestellten Beispiel wird auch die Linkslaufphase sanft begonnen, so daß sich eine Stillstandsphase zwischen Rechtslauf und Linkslauf mit einer Zeitdauer Δt3 ergibt, die gleichermaßen wie die jeweilige Zeitdauer Δt1 und Δt2 variierbar und im Extremfall 0 sein kann.

Die angegebenen Drehzahlwerte n1 und n2 sind innerhalb der durch die Patentansprüche angegebenen Grenzen frei wählbar, wobei eine Abweichung als deutlich gelten soll, wenn der Mittelwert eines Solldrehzahl-Bereichs vom Mittelwert des Drehzahl-Grenzwertes um mindestens 5 1/min abweicht. Zur Erzielung eines Optimums von Wirkungen müssen zur Wahl der Drehzahlen insbesondere auch feststehende Maschinenparameter berücksichtigt werden, die sich aus den Abmessungen der Wäschetrommel, ihrer Flutlöcher, der Mitnehmer und der Schöpfeinrichtungen ergeben.

Veränderliche Werte, wie die Beladungsmenge der Wäschetrommel, können vorteilhafterweise ebenfalls ebenfalls berücksichtigt werden und die Wahl der Drehzahlwerte beeinflussen, wenn die Waschmaschine eine Einrichtung zum Feststellen der Menge des eingebrachten Wäschepostens enthält. Aber auch ohne diese Einflußnahme ergibt sich bereits eine dem Optimum sehr nahekommende Verbesserung der Waschwirkung und Reduzierung des Wasser-, Waschmittel- und Energieverbrauchs.

## Patentansprüche

1. Verfahren zur Verbesserung der Durchflutung und der Waschwirkung von in einer Waschmaschine mit einer perforierten Wäschetrommel, die während des Wasch- und/oder Spülprozesses zeitweise mit wechselnden Drehrichtungen angetrieben wird, sogenannter Reversierbetrieb, zu waschenden Wäsche, **dadurch gekennzeichnet,** daß die Wäschetrommel in der einen Drehrichtung (-) auf eine erste Drehzahl (n1) deutlich unterhalb der Anlegedrehzahl und in der anderen Drehrichtung (+) auf eine zweite Drehzahl (n2) deutlich oberhalb der Anlegedrehzahl beschleunigt wird.

2. Verfahren nach Anspruch 1 mit in der Trommel angeordneten Mitnehmern mit Schöpfwirkung, dadurch gekennzeichnet, daß die erste Drehzahl (n1) in derjenigen Drehrichtung (-) angewendet und auf denjenigen Drehzahlwert, beispielsweise 35 1/min, eingestellt wird, bei der die Schöpfwirkung am größten ist.

3. Verfahren nach Anspruch 1 oder 2, dadurch gekennzeichnet, daß die zweite Drehzahl (n2) deutlich unterhalb der Resonanzdrehzahl liegt.

4. Verfahren nach einem der Ansprüche 1 bis 3, dadurch gekennzeichnet, daß die Wäschetrommel mindestens in der anderen Drehrichtung (+) mittels einer sogenannten Sanftanlauf-Schaltung langsam auf die Nenndrehzahl, beispielsweise 100 1/min, beschleunigt wird.

5. Verfahren nach Anspruch 2, dadurch gekennzeichnet, daß der Nennwert (n1) der ersten Drehzahl ungefähr gleich 35 1/min ist.

6. Verfahren nach Anspruch 3, dadurch gekennzeichnet, daß der Nennwert (n2) der zweiten Drehzahl ungefähr gleich 100 1/min ist.

7. Waschmaschine zur Durchführung des Verfahrens nach einem der Ansprüche 1 bis 4 mit einer Steuerungseinrichtung für die Drehzahl des Antriebsmotors der Wäschetrommel, dadurch gekennzeichnet, daß die Steuerungseinrichtung im Hinblick auf die Drehzahlwerte für den Reversierbetrieb derart einstellbar ausgebildet ist, daß die Wäschetrommel in der einen Drehrichtung (-) auf eine erste Drehzahl (n1) deutlich unterhalb der Anlegedrehzahl und in der anderen Drehrichtung (+) auf eine zweite Drehzahl (n2) deutlich oberhalb der Anlegedrehzahl beschleunigt wird.

8. Waschmaschine nach Anspruch 7 mit einer Einrichtung zum Feststellen der Menge des eingebrachten Wäschepostens, dadurch gekennzeichnet, daß die Nennwerte (n1 und n2) der Drehzahlen in Abhängigkeit von der Menge des Wäschepostens einstellbar sind.

## Claims

1. Method for improving the throughflow in and the washing effect on laundry to be washed in a washing machine with a perforated laundry drum which is driven with alternating directions of rotation, so-called reversing operation, for a time during the washing and/or rinsing process, characterised in that the laundry drum is accelerated in the one rotational direction (-) to a first rotational speed (n1) significantly below the laying-on rotational speed and in the other rotational direction (+) to a second rotational speed (n2) significantly above the laying-on rotational speed.

2. Method according to claim 1 with entraining members, which have a scooping effect, arranged in the drum, characterised in that the first rotational speed (n1) is applied in that rotational direction (-) and set to that rotational speed value, for example 35 revolutions per minute, for which the scooping effect is greatest.

3. Method according to claim 1 or 2, characterised in that the second rotational speed (n2) lies significantly below the resonance rotational speed.

4. Method according to one of the claims 1 to 3, characterised in that the laundry drum is accelerated at least in the other rotational direction (+) slowly to the nominal rotational speed, for example 100 revolutions per minute, by means of a so-called gentle running-up circuit.

5. Method according to claim 2, characterised in that the nominal value (n1) of the first rotational speed is approximately equal to 35 revolutions per minute.

6. Method according to claim 3, characterised in that the nominal value (n2) of the second rotational speed is approximately equal to 100 revolutions per minute.

7. Washing machine for the performance of the method according to one of the claims 1 to 4, with a control equipment for the rotational speed of the drive motor of the laundry drum, characterised in that the control equipment is constructed to be settable with a view to the rotational speed values for the reversing operation in such a manner that the laundry drum is accelerated in the one rotational direction (-) to a first rotational speed (n1) significantly below the laying-on rotational speed and in the other rotational direction (+) to a second rotational speed (n2) significantly above the laying-on rotational speed.

8. Washing machine according to claim 7, with an equipment for ascertaining the quantity of the introduced laundry load, characterised in that the nominal values (n1 and n2) of the rotational speeds are settable in dependence on the quantity of the laundry load.

## Revendications

1. Procédé d'amélioration de l'écoulement et de l'effet de lavage du linge à laver dans une machine à laver comprenant un tambour à linge perforé qui, pendant le processus de lavage et /ou de rinçage, est entraîné temporairement avec des sens de rotation alternatifs, ce qui est appelé mode de fonctionnement réversible, caractérisé en ce que le tambour à linge est accéléré dans l'un des sens de rotation (-) à une première vitesse de rotation (n1) située nettement au-dessous de la vitesse de rotation à laquelle le linge se met contre le tambour et dans l'autre des sens de rotation (+) à une deuxième vitesse de rotation (n2) située nettement au-dessus de la vitesse de rotation à laquelle le linge se met contre le tambour.

2. Procédé selon la revendication 1, comprenant des tocs d'entraînement disposés dans le tambour avec effet de recirculation, caractérisé en ce que la première vitesse de rotation (n1) est appliquée dans le sens de rotation (-) et est réglée sur la valeur de vitesse de rotation, par exemple 35 1/min, à laquelle l'effet de recirculation est le plus grand.

3. Procédé selon la revendication 1 ou 2, caractérisé en ce que la deuxième vitesse de rotation (n2) se situe nettement au-dessous de la vitesse de rotation de résonance.

4. Procédé selon l'une des revendications 1 à 3, caractérisé en ce que le tambour à linge est, au moins dans l'autre sens de rotation (+), lentement accéléré à la vitesse de rotation nominale, par exemple 100 1/min, par l'intermédiaire de ce que l'on appelle un circuit de démarrage en douceur.

5. Procédé selon la revendication 2, caractérisé en ce que la valeur nominale (n1) de la première vitesse de rotation est environ égale à 35 1/min.

6. Procédé selon la revendication 3, caractérisé en ce que la valeur nominale (n2) de la deuxième vitesse de rotation est environ égale à 100 1/min.

7. Machine à laver visant à mettre en oeuvre le procédé selon l'une des revendications 1 à 4, comprenant un dispositif de commande pour la vitesse de rotation du moteur de commande du tambour à linge, caractérisée en ce que le dispositif de commande est conçu en considération des valeurs de vitesse de rotation pour le mode de fonctionnement réversible en pouvant être réglé de manière telle que le tambour à linge dans l'un des sens de rotation (-) est accéléré à une première vitesse de rotation (n1) située nettement au-dessous de la vitesse de rotation à laquelle le linge se met contre le tambour et dans l'autre des sens de rotation (+) à une deuxième vitesse de rotation (n2) située nettement au-dessus de la vitesse de rotation à laquelle le linge se met contre le tambour.

8. Machine à laver selon la revendication 7, comprenant un dispositif pour déterminer la masse du lot de linge introduit, caractérisée en ce que les valeurs nominales (n1 et n2) des vitesses de rotation peuvent être réglées en fonction de la masse du lot de linge.
